# EUROPEAN PATENT SPECIFICATION

(11) **EP 0 474 424 B1**
(45) Date of publication and mention of the grant of the patent: **20.03.1996**
(21) Application number: 91307853.1
(22) Date of filing: 28.08.1991
(51) Int. Cl.: B01D 71/02, B01D 53/22, C01B 3/50, C04B 35/52, C04B 38/00

(54) **Membranes**
Membranen
Membranes

(30) Priority: 01.09.1990 GB 9019144
(43) Date of publication of application: 11.03.1992
(73) Proprietor: THE BRITISH PETROLEUM COMPANY P.L.C., London EC2M 7BA (GB)
(72) Inventor: Bromhead, Jilliam, Sunbury-on-Thames, Middlesex TW16 7LN (GB); Clint, John Howard, Sunbury-on-Thames, Middlesex TW16 7LN (GB); Lear, Anthony Martin, Sunbury-on-Thames, Middlesex TW16 7LN (GB); Oliver, Lee Frank, Sunbury-on-Thames, Middlesex TW16 7LN (GB); Tennison, Stephen Robert, Sunbury-on-Thames, Middlesex TW16 7LN (GB)
(74) Representative: Wilson, Michael John

(56) References cited:
- EP-A- 0 254 551
- GB-A- 2 207 666
- US-A- 2 611 750
- US-A- 4 685 940
- JOURNAL OF MATERIALS SCIENCE LETTERS vol. 3, no. 9, 1984, Spet., pages 789,790, London, GB; J.RAUTAVUORI et al.

## Description

The present invention relates to the production of asymmetric carbon structures comprising a carbon membrane. It is disclosed in EP 254 551 that porous carbon articles may be made by:
(a) partially curing a phenolic resin to a solid,
(b) comminuting the solid,
(c) forming the resulting comminuted solid into a pre-determined shape,
(d) sintering the comminuted resin so as to give a form-stable sintered shaped product, and
(e) carbonising the sintered shaped product, the temperature and duration of the curing step being selected so as to give a degree of cure sufficient to give a sinterable product.

US-A-4 685 940 discloses carbon membranes for use in separation processes. These are made by the pyrolysis of organic materials which do not melt or lose their structural integrity during carbonisation. Molecular sieve carbon membranes may be produced by controlling the temperature of the pyrolysis and subsequently subjecting the carbon to controlled oxidation. Among starting materials mentioned are thermosetting polymers. There is no specific disclosure of the preparation of carbon membranes from such polymers. There is a reference to the preparation of asymmetric membranes. Two methods are mentioned.

One method is the controlled pyrolysis of conventional asymmetric organic membranes. The major problem with this approach is that the mechanical stability of the carbonised material is poor.

The other method is the deposition of a thin layer of carbon on to a graphite support by plasma discharge. Plasma discharge is not suitable for depositing layers inside openings as opposed to on the outer surface of articles.

Derwent Abstract 91397Y/51 of Dutch patent application NL-A-77 05870 discloses the production of carbon membranes with an adjustable pore size based on mixtures of coal, elastomer and thermoplastic which are heated to 750°C. The membranes may be in the form of tubes.

The disadvantage with the membranes disclosed in the above abstract is that the entire thickness of the membrane will have the specified pore size. If the membrane is made thick enough to resist large pressure differentials then the rate of diffusion of fluids through the membrane will be adversely affected.

If a thin layer of polymer is deposited on to a porous ceramic support and the polymer is then carbonised the shrinkage in the deposited layer which takes place on carbonisation will produce severe stress cracking and flaking of the membrane layer. The method is therefore not suitable for the production of defect free membranes. Defects in a membrane used in a separation process will adversely affect its selectivity.

According to the present invention a process for the production of a structure for use in the production of a selective membrane comprises forming a porous shaped article from sinterable phenolic resin polymer, depositing on said shaped article a layer of compatible organic polymer with a carbon yield of at least 40%, and carbonising the resulting product at a temperature of from 350°C to 1200°C thereby forming a coherent membrane layer.

Accordingly to a further aspect of the present invention the process for obtaining a gas enriched in hydrogen from a mixture of hydrogen and gaseous hydrocarbons comprises passing the mixture along one side of a supported carbon membrane and recovering a gas enriched in hydrogen from the other side, the carbon membrane being made by forming a porous shaped article from sinterable phenolic resin powder, depositing on said shaped article a layer of compatible organic polymer with a carbon yield of at least 40%, and carbonising the resultant product at a temperature of from 350 to 1200°C thereby forming a coherent membrane layer.

The shaped article is formed from sinterable phenolic resin powder. The powder has sufficient degree of cure not to melt and lose the structure of the individual particles during the carbonisation step. It is however not so completely cured that the particles are unable to sinter together where they are in contact when heated and/or compressed so that a physically strong product is produced on carbonisation.

EP-A-254 551 discloses a process in which suitable sinterable phenolic resin powders are produced and formed into shaped articles which may be carbonised to give strong carbon artefacts. In the process described in EP-A-245 551 a phenolic resin is partially cured to a solid, which is then ground to a powder. The time and temperature of the curing step are selected so as to give a partially cured product which is sinterable. It may be advantageous to add curing agent in two stages. Thus the curing agent may be added to phenolic resin which is then partially cured. The partially cured resin is then ground to a powder, mixed with additional curing agent and then formed into shaped articles which are then subjected to a further curing step to give sinterable material.

As disclosed in EP-A-245 551 it is preferred to use novolac resins, with hexamethylene tetramine as the preferred curing agent.

The resin is ground to produce a powder with a mean particle size which is preferably in the range 2µm-100µm, more preferably 17µm-35µm.

As disclosed in EP-A-245 551 the temperature and duration of the curing of the phenolic resin are preferably as to give a minimum strength in the sintered article before carbonisation. Using the conditions disclosed in EP-A-235 551 the degree of partial cure is such that tablets formed under the conditions used to produce the shaped articles before carbonisation have a diametric crush strength not less than 0.1 kg/mm.

The shaped article of phenolic resin is the precursor of a carbon shaped article which will act as support or substrate for the carbon membrane.

The shaped article on which the compatible resin is deposited may be for example a disk, sheet, or tube depending on the subsequent use of the carbonised product. Many membrane separation processes make use of tubular membranes and the process of the present invention makes possible the preparation of good quality carbon membranes on strong supports which is not possible by other methods.

The present invention may be used for the production of a structure having at least one channel passing through it, in particular a tube, which may be coated with carbon layer on the inside or the outside of the tube.

The present invention is particularly suitable for the production of a structure comprising a carbon monolith with channels passing through it, which channels are coated with a carbon membrane. The previously proposed methods of making carbon membranes are not suitable for the manufacture of such structures.

Tubular and monolithic supports may be prepared by forming the phenolic resin into a dough and extruding through a die. The partially cured phenolic resin may be for example ground to a particle size in the range 17µm-35µm. It may then be mixed with for example 0-6% (e.g. 2%) commercially available methyl cellulose as an extruding agent and 0-8% hexamethylene tetramine dissolved in 45-65% wt (e.g. 50-55%) water to form a dough. Alternatively a mixture of methyl cellulose and polyethylene glycol may be used as an extruding agent. The dough is then forced through the die. Depending on the form of the die either a tube or a monolithic support with a plurality of channels passing through it may be obtained. The resulting extrudate is allowed to dry thoroughly in air at room temperature. This makes the extrudate easier to handle and the relative humidity of the air is thus desirably less than 50%.

A second curing step in addition to that used to produce the initial partially cured phenolic resin powder may be desirable before depositing the compatible polymer.

Relatively small tubular supports may then be subjected to a curing step additional to that used to produce the initial partially cured powder by heating at the rate of for example 2°C/min from ambient temperature to 150°C and maintaining this temperature for 1 hour. Larger artefacts, for example monoliths, may be cured by heating at the rate of 25°C/hour to 150°C and then maintaining this temperature for at least 5 hours. Relatively slow heating to the desired final temperature is important if optimum results are to be be obtained.

The polymer deposited on the phenolic resin support is a compatible polymer with a high carbon yield.

By "high carbon yield" we mean that the polymer gives a high yield of carbon, based on the weight of the original polymer, when carbonised. The carbon yield is preferably at least 40%. Preferably the carbon yield of the polymer is close to the carbon yield of the support, and carbon yields of 45%-55%, e.g. about 50% are preferred. The polymer preferably has a shrinkage on carbonisation which is as close to the support as possible.

By "compatible" we mean that it is capable of interacting with the phenolic resin support and itself so as to produce a coherent membrane layer after carbonisation, and that it can be deposited on the phenolic resin without damaging the phenolic resin.

Phenolic resins (both resoles and novolaks), polyimides, and polyamides are examples of suitable compatible polymers with a high carbon yield. These materials will form a coherent layer on the support either on evaporation of solvent or by melting and flowing together on heating and interact with the support so as to give an adherent carbon layer after carbonisation.

Polyvinylidene chloride in contrast is not a compatible resin as it flakes from the surface of the support on carbonisation while polyacrylonitrile is only soluble in solvents which seriously swell and destroy the structural integrity of the phenolic resin support.

A person skilled in the art who has studied the disclosure of this specification will be able to select suitable compatible polymers with high carbon yields by simple routine tests.

Where the polymer deposited on the shaped article is a phenolic resin then, in contrast to the phenolic resin forming the body of the shaped article, it is fusible, i.e. on heating it will melt to form a uniform layer without the macro-porosity found in the underlying shaped article.

When using a phenolic resin to form a layer on the surface of the shaped article the phenolic resin should be selected such that its viscosity when molten is not so low that it can be lost into the macropore structure of the substrate (i.e. the shaped article which acts as support) or act as a swelling agent for the cured novolac resin support. This can be achieved by careful selection of a resole to be used or by partially curing a particulate novolak precursor by including a small proportion of hexamine (without curing to the extent to cause loss of thermoplastic properties).

Similarly if the compatible polymer resin is deposited from a solution then the solution should not be of such a nature that it is lost into the porous support without forming the membrane layer.

The compatible polymer with high carbon yield may be applied to the porous shaped phenolic resin article as a powder which is uniformly spread over the surface to be coated. This can be readily achieved on flat surfaces. If tubes or the interior surfaces of the monoliths are to be coated using polymer powder then a stable dispersion of the polymer in a liquid, preferably water, can be used. Hydrocarbon liquids can also be used. Alternatively it may be applied as a solution. Example of suitable solvents are ethanol and acetone. Solvents which interact with or degrade the phenolic resin support should not be used. The coating of tube is preferably carried out using a resole dissolved in an organic solvent. A preferred method of depositing the compatible polymer is to spray the shaped article with a solution of the compatible polymer in an organic solvent.

Where the compatible polymer is deposited from non-aqueous solvent or using a dry powder the phenolic resin support is most desirably dry before the compatible polymer is deposited on it. If it is not completely dry then water absorbed in the resin or any agents to facilitate extrusion can be involved during subsequent heating steps and produce bubbles and defects in the membrane layer. Where water is present as a result of the process used to produce the shaped article it is removed by heating prior to coating, e.g. by holding the support in an air or inert gas oven at for example 80-90°C prior to coating. It may be desirable to carry out the coating with compatible resin immediately after the drying step to prevent the support picking up moisture from the atmosphere or to arrange for storage of the dry support in a controlled (low) humidity atmosphere before coating with the compatible polymer. As an alternative it may be possible to dry the coated support at low temperatures after the compatible polymer has been deposited, but this will usually be less convenient.

A drying step before deposition of the compatible polymer is not required if the polymer is deposited from an aqueous medium.

Porous articles such as tubes may for example be coated on their outer sides by sealing any openings, dipping the article into a solution of the resin, removing the tube from the solution and then allowing the solvent to evaporate.

Alternative methods of coating the outside of tubes are injection coating and spray coating. In either of these methods the phenolic resin support is preferably dried for at least 1 hour before coating. It is then for example rotated at a constant speed while applying a solution of resole in ethanol. The solution may be obtained by diluting a commercially available solution of resole in ethanol with additional absolute ethanol. The amount of diluent added is such as to give a solution viscosity which facilitates the deposition of the resole. The injection coating method uses a container with a narrow orifice, e.g. a pipette, to introduce a stream of liquid on to the tube. The spray coating method uses a spray nozzle, e.g. an air brush, to produce a fine spray of the solution which is applied to the tube. The spray coating method uses a spray nozzle, e.g. an air brush, to produce a fine spray of the solution which is applied to the tube. This has the advantage that thinner coatings can be applied, although varying the solution concentration can also be used to vary the coating thickness.

The tube is preferably dried in air at room temperature for at least 24 hours before curing. A slow curing cycle is preferably used to prevent defects being formed. An example of such a cycle consists of heating at the rate of 2°C/min to 70°C, maintaining this temperature for 1 hour, then heating at the range of 15°C/hour to 120°C, and then maintaining this temperature for 20 minutes. In a typical coating procedure three coats may be applied with intermediate drying and curing steps. If the procedure set out above is followed and the membrane is carbonised at 900°C then a membrane thickness of approximately 60µm can be obtained. However if a spray technique is used to apply resole solution then 6 coats may be required to produce a 60 µm thick membrane.

Coating the interior surface of tubes or multi-channel monoliths requires different methods. In this instance evaporation of the coating solvent is limited and problems can occur with penetration of the solution into macropores of the phenolic resin membrane support. It may be desirable to use high viscosity coating solutions, obtained either by increasing the concentration of polymer or by adding viscosity modifying agents.

Alternatively the coating or deposition step may be carried out using a finely powdered fusible compatible polymer, where the powder size is such (e.g. around 1-10µm) that penetration into the membrane support is limited. A good coating of the fusible polymer may be obtained by either relying on capillary suction of the liquid carrier into the membrane support structure or by placing the tube or monolith under vacuum.

A further alternative is to cause the coating layer to react with the support to induce a degree of cure at the surface. This could be achieved by e.g. impregnating the membrane support with a catalyst for the cross-linking of a resole precursor and then flowing the resole solution through the tubes or the channels in a monolith.

The thickness of the membrane layer can be adjusted by adjusting the concentration of the solution or dispersion of the compatible polymer and producing the desired thickness in a single step. However it is preferred to deposit at least two coats of polymer to obtain the desired thickness as this reduces the risk of producing a defective membrane layer. Where the compatible polymer is a phenolic resole it is necessary to carry out a cure step after each coating to prevent the re-solution of the polymer layer already deposited. This curing step may for example be carried out by heating from ambient temperature to 120°C at a slow rate, particularly in the range 70-120°C. Heating in the range 70-120°C should preferably take at least 3 hours.

The preferred membrane layer thickness will depend on the particle size of the ground phenolic resin used to prepare the support. Clearly, it would not be possible to produce for example a 5µm thick membrane on a porous support formed from 20µm particles due both to surface roughness and the problems of bridging the macropores formed in the support. Ideally the thickness of the membrane layer should be at least equal to the size of the particles from which the support is formed, and is preferably at least 3 times the particle size. The thickness of each layer used to build up the total polymer coat giving rise to the membrane is preferably 0.5 to 1 times the particle size of the support.

If a membrane thickness of as low as 10µm is used then a modified deposition process is desirable if the porous support has been formed from particles in the range 17-35µm (the preferred range for producing supports by extrusion). A graded support is formed by depositing a layer of small particle size non-fusible novolak resin on the main support, prior to depositing the compatible polymer. This layer of small particle size infusible polymer is preferably not more than about 50µm thick, provided that a uniform and defect free layer is obtained. The small infusible particles may be deposited using a slurry or dispersion of partially cured novolak with a particle size which is preferably in the range 0.5-10µm, where the size is determined by the thickness of the membrane layer to be deposited. After this layer has been deposited it may be cured as already described.

In the case of tubular and multi-channel monolithic supports where the inside of the tubes or channels has been coated with the membrane layer it is also necessary to seal the ends of the tube or monolith so that when in use gases do not diffuse through the porous substrate and so by-pass the membrane. This end seal may be applied before the deposition of the compatible polymer, but is preferably applied after such deposition. The seal may be formed by depositing a layer of compatible polymer before carbonisation or by applying molten metal. For low temperature uses the seal may be obtained by depositing a polymer layer after carbonisation.

For applications where a very high flux is required without losing selectivity, it will be necessary to have a very thin defect free carbon membrane layer. Difficulties in achieving a thin defect free initial polymer coating can be overcome by laying down a thicker polymer layer by methods which introduce controlled porosity into the polymer or final carbon layer and yet retain a defect free membrane. For example, incorporating tiny particles of a material into the polymer coating solution which will completely disintegrate during carbonisation, leaving a network of appropriately sized voids. Alternatively, the membrane layer on the porous support may be produced by the method of phase inversion. In this well established process for asymmetric membrane production, the coated support is immersed into a coagulation bath before the solvent in the polymer solution has evaporated. The coagulation bath contains a non-solvent for the polymer which is miscible with the solvent in the polymer solution. This causes the polymer to precipitate on contact with the surface thus forming a skin. The diffusion of solvent from below the skin is restricted and a gel is formed which gradually solidifies into a graded porous structure, with greater porosity away from the skin.

The basic conditions for the carbonisation step are disclosed for example EP 254 551. It may be desirable to control the carbonisation step more closely if carbon membrane layers having desired degrees of microporosity are required. The microstructure in carbonised polymers only develops after carbonisation to temperatures above approximately about 350°C while access to the porosity is subsequently lost by pore closure at temperatures above approximately 1200°C. If carbon membranes with molecular sieve properties are to be formed directly then it is necessary to control the carbonisation temperature so as to maintain it in the range given above. The nature of the micropores is dependent on the temperature, the compatible polymer uses as a precursor of the carbon membrane and the extent to which the precursor is purged during the carbonisation process.

The present invention is based on the understanding that to obtain satisfactory results it is not sufficient to deposit a precursor of the carbon membrane on a support. Neither is it sufficient to deposit the precursor on a carbon support. In general such a procedure leads to cracking or splitting of the carbon membrane making it unsuitable for its purpose. To obtain satisfactory results with a mechanically strong support it is necessary to form a carbon membrane and a carbon support simultaneously from suitable precursors.

As indicated above a hydrogen enrichment process forms part of the present invention. The hydrogen enrichment process may be carried out over a wide range of temperatures. Thus temperatures in the range 0°C to 650°C may be used. The rate of permeation is increased as the temperature is increased. For maximum selectivity to hydrogen it may be desirable to use a temperature below the temperature giving maximum permeation rate, for example a temperature in the range 350°C to 450°C.

The degree of enrichment in hydrogen obtained will also depend on the differential pressure, i.e. the difference between the pressures on the two sides of the membrane. Very large pressure differentials appear to lead to a reduction in selectivity to hydrogen. Preferably the pressure differential is less than 0.1 MN.

The invention will now be described with reference to the following experiments in which examples of the invention are identified by numbers and comparative tests, not according to the invention are identified by letters.

### Example 1

A commercially available phenol-formaldehyde novolac resin (available from BP Chemicals as grade J1050H) containing 3% wt/wt hexamethylene tetramine was cured by heating in a metal tray at 150°C for 2 hours and then ground to a particle size range of 17-35µm. These conditions were known from experience to be suitable for giving a sinterable product for carbonisation. This was mixed into a dough using 4% wt commercially available methyl cellulose ("Methocel" 20-231) ("Methocel" is a trade name of Dow Chemicals) and 8% hexamine dissolved in 55% wt water. The dough was extruded to form a tube (8 mm O/D x 4mm I/D) by pushing it through a pre-cast die under pressure. The tube was dried in air for 3 days at room temperature. It was then heated in air in an oven at 150°C at the rate of 2°C/min and held at this temperature for 1 hour.

The outside of the tube was then coated with a phenol-formaldehyde resole (commercially available from BP Chemicals as grade J2225S as a solution in ethanol). This was diluted with additional ethanol in the volume ratio 3:1. The coating was carried out immediately after removal of the tube from the oven. In the coating process the tube was continuously rotated and resole solution was injected onto the surface using a pipette. The coating was dried in air at room temperature for 24 hours and was then cured by heating from 30°C to 120°C over 5 hours. The coating process was repeated twice. The tube was then carbonised by heating to 900°C in a nitrogen atmosphere at the rate of 25°C/hour and held at 900°C for 1 hour. The resulting carbon tube coated with a carbon membrane was cut to a length of 10.5 cm.

The tube was then tested to determine its gas permeability rate and its selectivity towards hydrogen. The tube was mounted in a furnace using ¼ inch (ca. 6 mm) compression fittings and graphite "O" rings to allow for testing up to 550°C. A nitrogen carrier gas was passed through the tube at atmospheric pressure and a constant inlet flow rate set using a mass flow controller. The feed gas, comprising 30% hydrogen, 40% methane, and 30% propane, was passed along the outside of the tube at a higher pressure than the carrier gas. Both gas streams were quantitively analysed on a gas chromatograph while the outlet flow rates was measured using a bubble flow meter. Tests was carried out at temperatures of 19°C, 100°C, 250°C, 400°C, and at 500°C; and at feed gas pressures of 10, 25, 45, 60 and 85 psi (68.9, 172,4, 310.3, 413.7 and 586.1 kPa) above that of the carrier gas. The permeation rates of the gases in these experiments is given in Table 1.

### Comparative Test A

This is a comparative test not according to the invention, showing the results of attempting to make a supported carbon membrane by applying a phenolic resin coating to a carbon tube.

A phenolic resin novolac tube was extruded, dried and cured as in Example 1. It was then carbonised by heating to 900°C at a rate of 25°C/hour and kept at 900°C for 1 hour. After carbonisation the tube was dried at 70°C for 1 hour and was then coated with a solution of resole in absolute ethanol similar to that used in Example 1. The tube was then dried and cured using the method described in Example 1. A total of three coats of resole were applied, each one being followed by a drying and curing step to ensure complete covering of the carbon support. The resole was then carbonised under the conditions used to carbonise the novolac tube.

After the carbonisation step the carbon layer derived from the resole coating was found to display extensive cracking making it unsuitable for any selective separation processes based on the properties of the carbon membrane.

### Comparative Test B

This is a comparative test which demonstrates the result of using an organic polymer which is not compatible with the support because it does not interact with it to form a good bond.

Phenolic resin tubes prepared as in Example 1 were coated with polyvinyl chloride or with polyvinylidene chloride in place of the phenolic resin used in Example 1. The coatings were applied by dip-coating in 20% solutions of the polymer in tetrahydrofuran solvent. The tubes were allowed to dry by evaporation overnight at room temperature. They were then carbonised by heating at the rate of 25°C/hour to 700°C. The resulting surface coating of carbon was both flaky and patchy and did not adhere to the carbonised support tube.

### Comparative Test C

This experiment demonstrates the results of using a polymer which is not compatible with the support because it is deposited using a solvent which degrades the phenolic resin support.

Polyacrylonitrile was dissolved with heating and stirring in N,N-dimethylformamide. A phenolic resin tube was prepared as in Example 1 and was dip-coated with the dimethylformamide solution and allowed to stand. The solvent badly degraded the structural integrity of the phenolic resin support tube.

### Example 2

A phenolic resin novolac support tube was prepared using the same materials and conditions given in Example 1. The outside of the tube was then coated with the resole/ethanol solution used in Example 1. The coating, carried out immediately after removing the tube from the oven, was done by continually rotating the tube and spraying the resole solution onto the surface using an air brush. The coating was dried in air at room temperature for 24 hours prior to being cured by heating from 30°C to 120°C over 5 hours. The coating and curing process was repeated four times. The tube was then carbonised to 900°C at 25°C hour⁻¹ and held at this time for 1 hour. The resultant carbon membrane tube was cut to a length of 16 cm.

The tube was then tested to determine its gas permeation rate and selectivity towards hydrogen under the same experimental conditions given in Example 1. The permeation rates of the gases in these tests is given in Table 3. Selectivity of the membrane to hydrogen and methane is given in Table 4.

### Example 3

The same membrane as used in Example 2 was tested under the same experimental conditions with 3 different feed gases consisting of an individual component of the mixed feed gas. Tests were carried out in the same order as Example 2. Evaluation of hydrogen permeation was carried out first followed by methane permeation and then propane permeation. Permeation rates for the individual components are given in Table 5.

**TABLE 1**

| Permeation Rates for Hydrogen, Methane and Propane From Mixed Feed Gas (cm³/cm²/s/cmHg x 10⁷) | | | | | |
|---|---|---|---|---|---|
| Pressure Differential bar (psi) | Temperature (C) | | | | |
| | 23 | 100 | 250 | 400 | 550 |
| Hydrogen | | | | | |
| 0,69 (10) | 8.56 | 11.37 | 12.41 | 11.69 | 15.70 |
| 1,72 (25) | 8.57 | 11.28 | 11.94 | 12.06 | 15.09 |
| 3,10 (45) | 9.81 | 11.19 | 11.70 | 12.44 | 15.10 |
| 4,13 (60) | 9.86 | 10.83 | 11.21 | 12.13 | 15.31 |
| 5,86 (85) | 9.58 | 10.84 | 11.49 | 12.04 | 14.83 |

| Methane | | | | | |
|---|---|---|---|---|---|
| 0,69 (10) | 0.79 | 0.96 | 0.92 | 1.01 | 1.90 |
| 1,72 (25) | 1.61 | 1.48 | 1.37 | 1.58 | 2.47 |
| 3,10 (45) | 2.47 | 2.02 | 2.66 | 2.11 | 3.15 |
| 4,13 (60) | 2.91 | 2.28 | 1.95 | 2.30 | 3.59 |
| 5,86 (85) | 3.23 | 2.70 | 2.32 | 2.58 | 3.99 |

| Propane | | | | | |
|---|---|---|---|---|---|
| 0,69 (10) | 0.89 | 0.82 | 0.91 | 0.69 | 1.09 |
| 1,72 (25) | 1.49 | 1.20 | 1.15 | 1.24 | 1.63 |
| 3.10 (45) | 2.17 | 1.63 | 1.44 | 1.74 | 2.26 |
| 4.13 (60) | 2.52 | 1.89 | 1.61 | 1.95 | 2.71 |
| 5,86 (85) | 2.82 | 2.23 | 1.94 | 2.19 | 3.18 |

| Total | | | | | |
|---|---|---|---|---|---|
| 0,69 (10) | 10.23 | 13.15 | 14.24 | 13.38 | 18.69 |
| 1,72 (25) | 11.67 | 13.96 | 14.46 | 14.88 | 19.19 |
| 3,10 (45) | 14.46 | 14.83 | 15.79 | 16.29 | 20.51 |
| 4,13 (60) | 15.29 | 14.99 | 14.77 | 16.38 | 21.61 |
| 5,86 (85) | 15.63 | 15.76 | 15.75 | 16.80 | 22.00 |

**TABLE 2**

| Selectivity to Hydrogen and Methane | | | | | |
|---|---|---|---|---|---|
| Pressure Differential bar (psi) | Temperature (C) | | | | |
| | 23 | 100 | 250 | 400 | 550 |
| Hydrogen | | | | | |
| 0,69 (10) | 9.65 | 13.83 | 13.70 | 16.91 | 14.36 |
| 1,72 (25) | 5.74 | 9.40 | 10.35 | 9.75 | 9.28 |
| 3,10 (45) | 4.51 | 6.88 | 8.14 | 7.15 | 6.67 |
| 4,13 (60) | 3.91 | 5.73 | 6.97 | 6.23 | 5.66 |
| 5,86 (85) | 3.40 | 4.87 | 5.93 | 5.51 | 4.67 |

| Methane | | | | | |
|---|---|---|---|---|---|
| 0,69 (10) | 0.89 | 1.17 | 1.02 | 1.45 | 1.73 |
| 1,72 (25) | 1.07 | 1.23 | 1.19 | 1.28 | 1.52 |
| 3,10 (45) | 1.14 | 1.24 | 1.85 | 1.21 | 1.39 |
| 4,13 (60) | 1.16 | 1.21 | 1.21 | 1.18 | 1.33 |
| 5,86 (85) | 1.15 | 1.21 | 1.20 | 1.18 | 1.26 |
| Selectivity = Component Permeation Rate/Propane Permeation Rate | | | | | |

**TABLE 3**

| Permeation Rates for Hydrogen, Methane and Propane From Mixed Feed Gas (cm³/cm²/s/cmHg x 10⁷) | | | | | |
|---|---|---|---|---|---|
| Pressure Differential bar (psi) | Temperature (C) | | | | |
| | 23 | 100 | 250 | 400 | 550 |
| Hydrogen | | | | | |
| 0,69 (10) | 0.97 | 3.12 | 8.04 | 11.64 | 12.73 |
| 1,72 (25) | 1.16 | 3.30 | 8.55 | 11.78 | 13.00 |
| 3,10 (45) | 1.29 | 3.39 | 8.57 | 11.21 | 13.42 |
| 4,13 (60) | 1.44 | 3.48 | 8.49 | 11.26 | 14.19 |
| 5,86 (85) | 1.51 | 3.57 | 8.42 | 11.50 | 14.57 |

| Methane | | | | | |
|---|---|---|---|---|---|
| 0,69 (10) | 0.47 | 0.41 | 0.37 | 0.41 | 0.72 |
| 1,72 (25) | 0.82 | 0.67 | 0.56 | 0.62 | 1.01 |
| 3,10 (45) | 1.04 | 0.88 | 0.71 | 0.73 | 1.23 |
| 4,13 (60) | 1.21 | 0.99 | 0.78 | 0.83 | 1.41 |
| 5,86 (85) | 1.29 | 1.11 | 0.87 | 0.95 | 1.57 |

| Propane | | | | | |
|---|---|---|---|---|---|
| 0,69 (10) | 0.45 | 0.33 | 0.25 | 0.25 | 0.38 |
| 1,72 (25) | 0.65 | 0.53 | 0.40 | 0.42 | 0.63 |
| 3,10 (45) | 0.77 | 0.68 | 0.53 | 0.52 | 0.83 |
| 4,13 (60) | 0.89 | 0.76 | 0.58 | 0.61 | 0.98 |
| 5,86 (85) | 0.96 | 0.85 | 0.65 | 0.72 | 1.13 |

| Total | | | | | |
|---|---|---|---|---|---|
| 0,69 (10) | 1.89 | 3.86 | 8.66 | 12.30 | 13.83 |
| 1,72 (25) | 2.64 | 4.51 | 9.51 | 12.83 | 14.64 |
| 3,10 (45) | 3.10 | 4.96 | 9.81 | 12.47 | 15.49 |
| 4,13 (60) | 3.54 | 5.22 | 9.85 | 12.69 | 16.59 |
| 5,86 (85) | 3.76 | 5.53 | 9.94 | 13.18 | 17.27 |

**TABLE 4**

| Selectivity to Hydrogen and Methane | | | | | |
|---|---|---|---|---|---|
| Pressure Differential bar (psi) | Temperature (C) | | | | |
| | 23 | 100 | 250 | 400 | 550 |
| Hydrogen | | | | | |
| 0,69 (10) | 2.16 | 9.37 | 31.55 | 47.09 | 33.83 |
| 1,72 (25) | 1.78 | 6.22 | 21.59 | 28.05 | 20.56 |
| 3,10 (45) | 1.68 | 4.96 | 16.29 | 21.47 | 16.10 |
| 4,13 (60) | 1.62 | 4.60 | 14.57 | 18.55 | 14.46 |
| 5,86 (85) | 1.58 | 4.21 | 12.88 | 15.91 | 12.86 |

| Methane | | | | | |
|---|---|---|---|---|---|
| 0,69 (10) | 1.05 | 1.22 | 1.44 | 1.67 | 1.92 |
| 1,72 (25) | 1.26 | 1.27 | 1.42 | 1.49 | 1.60 |
| 3,10 (45) | 1.35 | 1.29 | 1.36 | 1.40 | 1.48 |
| 4,13 (60) | 1.37 | 1.31 | 1.34 | 1.36 | 1.44 |
| 5,86 (85) | 1.35 | 1.31 | 1.33 | 1.32 | 1.38 |
| Selectivity = Component Permeation Rate/Propane Permeation Rate | | | | | |

**TABLE 5**

| Single Component Feed Gas Permeation Rates From Mixed Feed Gas (cm³/cm²/s/cmHg x 10⁷) | | | | | |
|---|---|---|---|---|---|
| Pressure Differential bar (psi) | Temperature (C) | | | | |
| | 23 | 100 | 250 | 400 | 550 |
| Hydrogen | | | | | |
| 0,69 (10) | 1.42 | 4.15 | 9.58 | 11.27 | 16.69 |
| 1,72 (25) | 1.99 | 4.48 | 9.94 | 12.79 | 15.35 |
| 3,10 (45) | 2.41 | 4.73 | 9.25 | 11.54 | 14.33 |
| 4,13 (60) | 2.68 | 4.91 | 10.04 | 13.07 | 14.30 |
| 5,86 (85) | 2.99 | 5.24 | 10.37 | 12.53 | 14.78 |

| Methane | | | | | |
|---|---|---|---|---|---|
| 0,69 (10) | 0.68 | 0.58 | 0.44 | 0.51 | 0.76 |
| 1,72 (25) | 1.07 | 0.94 | 0.66 | 0.76 | 1.17 |
| 3,10 (45) | 1.45 | 1.18 | 0.82 | 0.91 | 1.49 |
| 4,13 (60) | 1.52 | 1.31 | 0.92 | 1.06 | 1.67 |
| 5,86 (85) | 1.70 | 1.45 | 1.12 | 1.15 | 1.91 |

| Propane | | | | | |
|---|---|---|---|---|---|
| 0,69 (60) | 0.93 | 0.56 | 0.44 | 0.49 | 0.38 |
| 1,72 (25) | 1.32 | 0.90 | 0.66 | 0.57 | 0.62 |
| 3,10 (45) | 1.57 | 1.18 | 0.84 | 0.75 | 0.75 |
| 4,13 (60) | 1.72 | 1.33 | 0.93 | 0.86 | 0.86 |
| 5,86 (85) | 1.91 | 1.33 | 1.09 | 1.01 | 0.91 |

## Claims

1. A process for the production of a selective membrane comprises forming a porous shaped article from a sinterable phenolic resin powder, depositing on said shaped article a layer of compatible organic polymer with a carbon yield of at least 40%, and carbonising the resulting product at a temperature of from 350 to 1200°C thereby forming a coherent membrane layer.

2. The process according to claim 1 wherein the phenolic resin powder has a mean particle size which is in the range 2µm-100µm.

3. The process according to either of claims 1 or 2 wherein the porous shaped article has at least one channel passing through it.

4. The process according to claim 3 wherein the porous shaped article is a tube.

5. A process according to either one of claims 3 or 4 wherein the shaped article is produced by extrusion of a mixture of phenolic resin powder, water and a cellulose binder.

6. A process according to any one of the preceding claims wherein a phenolic novolac resin is partially cured and ground to a powder, and is mixed with additional curing agent before being formed into a shaped article, and the shaped article is subjected to an additional curing step before deposition of the compatible organic polymer.

7. A process according to any one of the previous claims wherein the compatible polymer is a fusible phenolic resin.

8. A process according to any one of the preceding claims wherein the compatible polymer has a carbon yield in the range 45-55%.

9. A process according to any one of the preceding claims wherein the porous shaped article is a tube and the compatible organic polymer is a phenolic resole resin deposited from a solution in an organic solvent.

10. A process according to any one of the preceding claims wherein the compatible polymer is deposited by spraying the shaped article with a solution of the compatible polymer in an organic solvent.

11. A process for obtaining a gas enriched in hydrogen from a mixture of hydrogen and gaseous hydrocarbons comprises passing the mixture along one side of a supported carbon membrane and recovering a gas enriched in hydrogen from the other side, the carbon membrane being made by forming a porous shaped article from sinterable phenolic resin powder, depositing on said shaped article a layer of compatible organic polymer with a carbon yield of at least 40%, and carbonising the resultant product, at a temperature of from 350 to 1200°C thereby forming a coherent membrane layer.

12. The process according to claim 11 wherein the mixture is at a temperature in the range 350°C to 450°C.

13. The process according to either of claims 11 and 12 wherein the pressure differential is less than 0.1 MN.

## Patentansprüche

1. Verfahren zur Herstellung einer selektiven Membran durch Ausbilden eines porösen Formkörpers aus einem sinterfähigen Phenolharzpulver, Abscheiden einer Schicht aus einem verträglichen organischen Polymer mit einer hohen Kohlenstoffausbeute von mindestens 40 % auf dem Formkörper und Verkohlen des erhaltenen Produkts bei einer Temperatur von 350° bis 1200°C unter Ausbilden einer kohärenten Membranschicht.

2. Verfahren nach Anspruch 1, wobei das Phenolharzpulver eine mittlere Teilchengröße im Bereich von 2 µm bis 100 µm aufweist.

3. Verfahren nach Anspruch 1 oder 2, wobei der poröse Formkörper mindestens einen Kanal aufweist, der durch ihn hindurch verläuft.

4. Verfahren nach Anspruch 3, wobei der poröse Formkörper ein Rohr ist.

5. Verfahren nach Anspruch 3 oder 4, wobei der Formkörper durch Strangpressen eines Gemisches aus Phenolharzpulver, Wasser und Cellulosebindemittel hergestellt wurde.

6. Verfahren nach einem der vorhergehenden Ansprüche, wobei ein Phenolnovolakharz teilweise gehärtet und zu Pulver vermahlen und anschließend mit zusätzlichem Härtungsmittel vermischt wird, bevor es zu einem Formkörper ausgeformt wird, worauf der Formkörper vor Abscheiden des verträglichen organischen Polymers einer weiteren Härtungsstufe unterzogen wird.

7. Verfahren nach einem der vorhergehenden Ansprüche, wobei das verträgliche Polymer ein schmelzbares Phenolharz ist.

8. Verfahren nach einem der vorhergehenden Ansprüche, wobei das verträgliche Polymer eine Kohlenstoffausbeute im Bereich von 45 bis 55 % aufweist.

9. Verfahren nach einem der vorhergehenden Ansprüche, wobei der poröse Formkörper ein Rohr ist und das verträgliche organische Polymer ein aus einer Lösung in einem organischen Lösungsmittel abgeschiedenes Phenolresolharz ist.

10. Verfahren nach einem der vorhergehenden Ansprüche, wobei das verträgliche Polymer durch Besprühen des Formkörpers mit einer Lösung des verträglichen Polymers in einem organischen Lösungsmittel abgeschieden wird.

11. Verfahren zur Gewinnung eines bezüglich Wasserstoff angereicherten Gases aus einem Gemisch von Wasserstoff und gasförmigen Kohlenwasserstoffen durch Leiten des Gemisches längs einer Seite einer auf einem Träger befindlichen Kohlenstoffmembran und Gewinnen eines bezüglich Wasserstoff angereicherten Gases an der anderen Seite, wobei die Kohlenstoffmembran durch Ausbilden eines porösen Formkörpers aus einem sinterfähigen Phenolharzpulver, Abscheiden einer Schicht aus einem verträglichen organischen Polymer mit einer hohen Kohlenstoffausbeute von mindestens 40 % auf dem Formkörper und Verkohlen des erhaltenen Produkts bei einer Temperatur von 350° bis 1200°C unter Ausbilden einer kohärenten Membranschicht hergestellt wurde.

12. Verfahren nach Anspruch 11, wobei das Gemisch bei einer Temperatur im Bereich von 350° bis 450°C vorliegt.

13. Verfahren nach Anspruch 11 oder 12, wobei die Druckdifferenz weniger als 0,1 MN beträgt.

## Revendications

1. Procédé de production d'une membrane sélective, comprenant la formation d'un article façonné poreux à partir d'une résine phénolique en poudre pouvant être frittée, le dépôt sur cet article façonné d'une couche de polymère organique compatible avec un rendement en carbone d'au moins 40 % et la carbonisation du produit résultant à une température de 350 à 1200°C de manière à former ainsi une membrane en couche cohérente.

2. Procédé suivant la revendication 1, dans lequel la résine phénolique en poudre a un diamètre moyen des particules qui se situe dans la plage de 2 µm à 100 µm.

3. Procédé suivant l'une ou l'autre des revendications 1 ou 2, dans lequel l'article façonné poreux est traversé par au moins un canal.

4. Procédé suivant la revendication 3, dans lequel l'article façonné poreux est un tube.

5. Procédé suivant l'une ou l'autre des revendications 3 ou 4, dans lequel l'article façonné est produit par extrusion d'un mélange de résine phénolique en poudre, d'eau et d'un liant cellulosique.

6. Procédé suivant l'une quelconque des revendications précédentes, dans lequel une résine phénolique novolaque est partiellement durcie et broyée en une poudre et est mélangée avec une quantité additionnelle d'agent durcissant avant d'être façonnée en un article de configuration donnée et l'article façonné est soumis à une opération supplémentaire de durcissement avant le dépôt du polymère organique compatible.

7. Procédé suivant l'une quelconque des revendications précédentes, dans lequel le polymère compatible est une résine phénolique fusible.

8. Procédé suivant l'une quelconque des revendications précédentes, dans lequel le polymère compatible a un rendement en carbone compris dans la plage de 45 à 55 %.

9. Procédé suivant l'une quelconque des revendications précédentes, dans lequel l'article façonné poreux est un tube et le polymère organique compatible est une résine phénolique sous forme de résol déposée à partir d'une solution dans un solvant organique.

10. Procédé suivant l'une quelconque des revendications précédentes, dans lequel le polymère compatible est déposé par pulvérisation d'une solution de ce polymère dans un solvant organique sur l'article façonné.

11. Procédé d'obtention d'un gaz enrichi en hydrogène à partir d'un mélange d'hydrogène et d'hydrocarbures gazeux, qui comprend des opérations consistant à faire passer le mélange le long d'un côté d'une membrane en carbone pourvue d'un support et à recueillir un gaz enrichi en hydrogène de l'autre côté, la membrane en carbone étant réalisée par formage d'un article poreux de configuration donnée à partir d'une résine phénolique en poudre pouvant être frittée, dépôt sur cet article façonné d'une couche de polymère organique compatible avec un rendement en carbone d'au moins 40 % et carbonisation du produit résultant à une température de 350 à 1200°C de manière à former ainsi une membrane en couche cohérente.

12. Procédé suivant la revendication 11, dans lequel le mélange se trouve à une température comprise dans la plage de 350 à 450°C.

13. Procédé suivant l'une ou l'autre des revendications 11 et 12, dans lequel la différence de pression est inférieure à 0,1 MN.
